# EUROPÄISCHE PATENTSCHRIFT

(11) **EP 2 572 906 B1**
(45) Veröffentlichungstag und Bekanntmachung des Hinweises auf die Patenterteilung: **09.08.2017**
(21) Anmeldenummer: 12174112.8
(22) Anmeldetag: 28.06.2012
(51) Int. Cl.: B60D 1/07

(54) **Kupplungsadapter**
Coupling adapter
Adaptateur de couplage

(30) Priorität: 22.09.2011 DE 102011053861
(43) Veröffentlichungstag der Anmeldung: 27.03.2013
(73) Patentinhaber: GKN Walterscheid GmbH, 53797 Lohmar (DE)
(72) Erfinder: Afflerbach, Henning, 44227 Dorsten (DE); Götzen, Nils, 47443 Moers (DE); Schröder, Achim, 53840 Troisdorf (DE)
(74) Vertreter: Müller, Thomas Michael

(56) Entgegenhaltungen:
- EP-A1- 0 640 502
- DE-A1- 3 300 439
- DE-B- 1 016 570
- US-A- 2 614 861
- US-A- 2 872 213

## Beschreibung

Die Erfindung betrifft einen Kupplungsadapter zur Anordnung an einer Anhängekupplung, mit einem Gegenkupplungselement zur Verbindung mit einem Kupplungselement der Anhängekupplung und mit einer Verankerung zur Festlegung an einer Basis der Anhängekupplung.

Anhängekupplungen, die über Niederhalter verfügen, welche sich um eine horizontale Achse zumeist vertikal verschwenken lassen, sind allgemein bekannt. Bei dem Kupplungselement handelt es sich beispielhaft um einen Kupplungsbolzen oder eine Kupplungskugel, während das Gegenkupplungselement als Zugöse oder Kupplungspfanne ausgeführt werden kann. Der verschwenkbare Niederhalter sorgt im Allgemeinen dafür, dass beispielsweise die auf eine Kupplungskugel aufgesetzte Kugelpfanne in dieser Kupplungsstellung verriegelt wird. Derartige Anhängerkupplungen, die zum Einsatz an land- und forstwirtschaftlichen Zugmaschinen vorgesehen sind, müssen für große Stützlasten ausgelegt sein und verfügen daher in der Regel über ein Kupplungselement mit einem gegenüber den bei Personenfahrzeugen üblicherweise verwendeten Durchmesser des Kupplungsbolzens bzw. der Kupplungskugel erhöhten Durchmesser. Ein Verbinden von Anhängern, die überwiegend für den Einsatz an Personenfahrzeugen vorgesehen sind, mit den Anhängerkupplungen der land- und forstwirtschaftlichen Zugmaschinen ist so nicht möglich.

In der Druckschrift EP 0 640 502 A1 ist ein Kupplungsadapter gemäß dem Oberbegriff von Anspruch 1 zum Umrüsten einer Kugelkupplung auf eine Maulkupplung offenbart.

Eine Aufgabe der Erfindung besteht darin, einen Kupplungsadapter zur Verfügung zu stellen, der das Verbinden von Gegenkupplungselementen von geringerem Durchmesser mit Anhängerkupplungen aus dem land- und forstwirtschaftlichen Bereich mit demgegenüber größerem Durchmesser des Kupplungselements ermöglicht.

Die Aufgabe wird durch einen Kupplungsadapter nach Anspruch 1 gelöst. In den Unteransprüchen sind bevorzugte Ausführungsformen und vorteilhafte Weiterbildungen angegeben.

Der erfindungsgemäße Kupplungsadapter ist zur Anordnung an einer Anhängekupplung vorgesehen, insbesondere an einer Anhängekupplung einer forst- oder landwirtschaftlichen Zugmaschine. Der Kupplungsadapter weist dazu ein Gegenkupplungselement zur Verbindung mit einem Kupplungselement der Anhängekupplung auf, das Gegenkupplungselement ist also nach Größe und Form dem Kupplungselement angepasst. Insbesondere ist das Gegenkupplungselement einem zylindrischen Fußabschnitt des Kupplungselements angepasst, so dass das Gegenkupplungselement in Einbaulage den zylindrischen Fußabschnitt des Kupplungselements umschließt. Der Kupplungsadapter weist darüber hinaus eine Verankerung auf, welche zur Festlegung an einer Basis der Anhängekupplung vorgesehen ist. Erfindungsgemäß ist das Gegenkupplungselement ebenso wie die Verankerung an einem Adapterformteil angeordnet, wobei an dem Adapterformteil weiterhin eine Befestigungsvorrichtung für ein Adapterkupplungselement vorgesehen ist. Bevorzugt ist an der Befestigungsvorrichtung des Adapterformteils ein Adapterkupplungselement angeordnet. Erfindungsgemäß weist das Adapterkupplungselement einen Kugelkopf mit einem Durchmesser auf, der sich von dem Durchmesser des Kugelkopfs des Kupplungselements unterscheidet. Erfindungsgemäß ist der Durchmesser des Kugelkopfs des Adapterkupplungselements geringer, als bei dem Kugelkopf des Kupplungselements.

Besonders vorteilhaft ist der erfindungsgemäße Kupplungsadapter an land- und forstwirtschaftlichen Zugmaschinen einsetzbar, die wegen der häufig großen Stützlasten und Zuglasten besonders groß dimensionierte Kupplungselemente aufweisen. Mit dem erfindungsgemäßen Kupplungsadapter wird das Anhängen von Anhängern für Straßenfahrzeuge ermöglicht, deren Gegenkupplungselemente in der Regel kleiner dimensioniert sind.

Gemäß einer bevorzugten Ausführungsform des Kupplungsadapters ist vorgesehen, dass das Adapterformteil derart geformt ist, dass die Verbindung des Gegenkupplungselements gleichzeitig mit dem Festlegen der Verankerung herstellbar ist. Der Kupplungsadapter wird vorteilhaft in einem Montageschritt in zwei Punkten mit der Anhängekupplung verbunden. Die Befestigungsvorrichtung ist vorteilhaft derart an dem Kupplungsformteil angeordnet, dass eine Zuglast auf das Gegenkupplungselement und die Verankerung verteilt ist.

Gemäß einer weiteren bevorzugten Ausführungsform des Kupplungsadapters ist vorgesehen, dass die Verankerung einen Bolzen zum Einstecken in eine Bohrung der Anhängekupplung aufweist. Dadurch wird eine einfach herzustellende Verankerung an der Basis der Anhängekupplung erreicht. Insbesondere ist der Bolzen zum Einstecken in eine solche Bohrung der Anhängekupplung vorgesehen, welche für eine Aufnahme eines Niederhalters ausgerüstet ist. Da der Niederhalter bei Anwendung des erfindungsgemäßen Kupplungsadapters nicht eingesetzt wird, lässt sich bei Anhängekupplungen, die zur Aufnahme eines Niederhalters vorgesehen sind, auf diese Art besonders einfach eine stabile Verankerung des erfindungsgemäßen Kupplungsadapters herstellen. Weiterhin ist vorzugsweise eine Sicherungsnut zur Aufnahme eines Fixierbolzens an dem der Bolzen vorgesehen, wodurch vorteilhaft ein Lösen der Verankerung von der Basis der Anhängekupplung unterbunden wird. Eine weitergehende Sicherung wird beispielsweise noch durch die Verwendung eines Sicherungssplints an dem Fixierbolzen erreicht.

Gemäß einer weiteren bevorzugten Ausführungsform des Kupplungsadapters ist vorgesehen, dass die Befestigungsvorrichtung durch einen in Einbaulage vertikal angeordneten, plattenförmigen Abschnitt des Adapterformteils gebildet ist. Unter der Einbaulage ist ein Zustand zu verstehen, in welchem der Kupplungsadapter an der Anhängekupplung angeordnet ist, also mittels Gegenkupplungselement und Verankerung verbunden. An dem vertikal angeordneten, plattenförmigen Abschnitt lassen sich Adapterkupplungselemente ohne besonderen Aufwand anordnen. Insbesondere sind entsprechende Adapterkupplungselemente als Standardbauteile im Handel erhältlich. Die Befestigungsvorrichtung weist vorzugsweise Bohrungen, insbesondere zur Aufnahme von Befestigungsbolzen des Adapterkupplungselements auf.

Eine besonders vorteilhafte und vielseitig einsetzbare Ausführungsform des Kupplungsadapters ergibt sich, wenn das Adapterkupplungselement an der Befestigungsvorrichtung des Adapterformteils in einer Mehrzahl von Positionen anzuordnen ist, wobei die Positionen sich insbesondere durch den vertikalen Abstand von der Anhängekupplung unterscheiden. Die Angabe des vertikalen Abstands bezieht sich auf den in Einbaulage befindlichen Kupplungsadapter, welcher auf diese Weise besonders zum Einsatz an verschieden hoch angeordneten Anhängekupplungen von land- und forstwirtschaftlichen Zugmaschinen geeignet ist und Höhenunterschiede zu dem beispielsweise anzuhängenden PKW-Anhänger ausgleicht.

Nachfolgend wird die Erfindung anhand von Ausführungsbeispielen in Zeichnungen näher erläutert. Die Ausführungen sind lediglich beispielhaft und schränken den allgemeinen Erfindungsgedanken nicht ein.

Es zeigen
**Figur 1** eine Ausführungsform eines erfindungsgemäßen Kupplungsadapters zusammen mit einer Anhängekupplung in perspektivischer Darstellung;
**Figur 2** die Ausführungsform gemäß Figur 1 in einer Seitenansicht;
**Figuren 3 und 4** eine weitere Ausführungsform des erfindungsgemäßen Kupplungsadapters in zwei Seitenansichten.

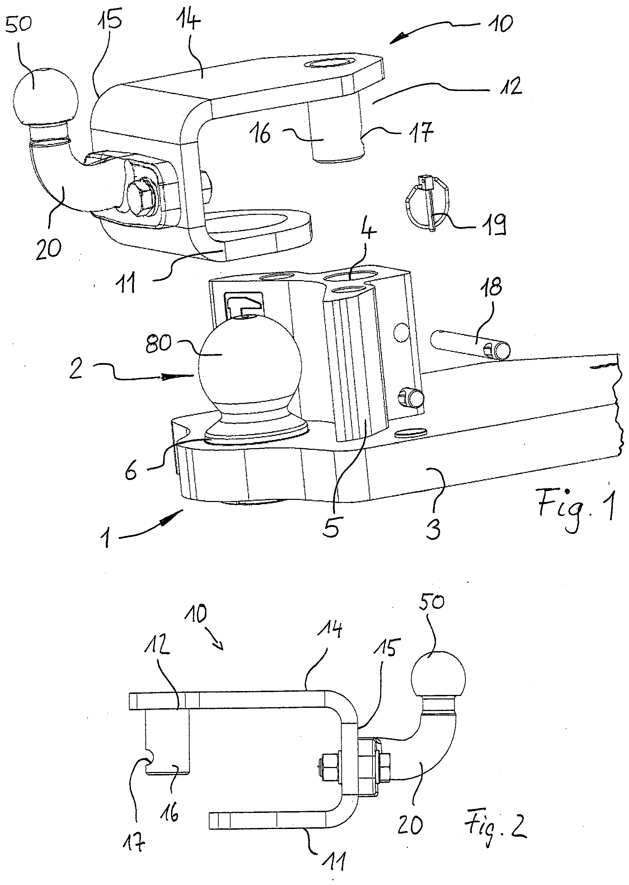

In der Figur 1 ist eine Ausführungsform eines erfindungsgemäßen Kupplungsadapters 10 gemeinsam mit einer Anhängekupplung 1 perspektivisch dargestellt. In der Darstellung sind der Kupplungsadapter 10 und die Anhängekupplung 1 nicht verbunden.

In der Figur 2 ist die Ausführungsform des Kupplungsadapters 10 gemäß Figur 1 in einer Seitenansicht ohne die Anhängekupplung 1, aber mit Adapterkupplungselement 20 dargestellt. Die Figuren 1 und 2 werden nachfolgend gemeinsam beschrieben.

Die Anhängekupplung 1 (Figur 1) weist eine Basis 3 auf, auf welcher ein Kupplungselement 2 angeordnet ist, hier ein Kugelkopf mit einem im Bereich der land- und forstwirtschaftlichen Zugmaschinen gängigen Durchmesser von beispielsweise 80 Millimeter, nachfolgend auch als Kugelkopf 80 bezeichnet. Das Kupplungselement 2 weist als Verbindung zwischen dem Kugelkopf 80 und der Basis 3 einen zylindrischen Fußabschnitt 6 auf. Ebenfalls auf der Basis 3 angeordnet, erstreckt sich ein Niederhalterblock 5, welcher zur Aufnahme eines nicht dargestellten Niederhalters dient. Zur Montage des Kupplungsadapters 10 wird der Niederhalter bei der gezeigten Ausführungsform zuvor entfernt. Auf eine Bohrung 4 in dem Niederhalterblock 5, sowie einen Fixierbolzen 18 zur Befestigung des Niederhalters wird im Zusammenhang mit dem Kupplungsadapter 10 noch näher eingegangen.

Der Kupplungsadapter 10 (Figuren 1 und 2) wird im Wesentlichen durch ein u-förmig gebogenes Adapterformteil 14 gebildet, wobei ein kürzerer Schenkel des Adapterformteils 14 als Gegenkupplungselement 11 für das Kupplungselement 2 ausgebildet ist. Das Gegenkupplungselement 11 umfängt in der Einbaulage vorzugsweise das Kupplungselement 2 im Bereich des zylindrischen Fußabschnitts 6, wobei das Gegenkupplungselement 11 dabei praktisch auf der Basis 3 aufliegt. An dem langen Schenkel des Adapterformteils 14 ist eine Verankerung 12 angeordnet, die im dargestellten Ausführungsbeispiel aus einem Bolzen 16 zum Einstecken in die Bohrung 4 besteht. Es ist erkennbar, dass das Adapterformteil 14 derart geformt ist, dass die Verankerung 12 und das Gegenkupplungselement 11 gleichermaßen und gleichzeitig mit der Anhängekupplung 1 verbindbar sind, so dass eine Verbindung an zwei Punkten herstellbar ist, nämlich an der Kugel 80 und über die Bohrung 4 in dem Niederhalterblock 5 an der Basis 3. In der Darstellung ist der Kupplungsadapter 10 derart zu der Anhängekupplung 1 ausgerichtet, dass die Verbindung durch Absenken des Kupplungsadapters 10 herstellbar ist.

Nachdem der Bolzen 16 in der Bohrung 4 angeordnet ist, lässt dieser sich durch den Fixierbolzen 18 sichern, welcher mit der Sicherungsnut 17 in dem Bolzen 16 zusammenwirkt. Ein zweiter Fixierbolzen ist erkennbar in dem Niederhalterblock 5 angeordnet. Dieser zweite Fixierbolzen dient zur Fixierung des Niederhalters und wird in dem dargestellten Ausführungsbeispiel nicht benötigt. Ein Sicherungssplint 19 kann den Fixierbolzen 18 zusätzlich sichern, nachdem dieser in Position gebracht ist. Die dargestellte Ausführungsform des Kupplungsadapters 10 ist auf eine solche Anhängekupplung 1 angepasst, welche mit einem Niederhalter ausgestattet ist. Die Erfindung ist jedoch nicht auf diese Ausführungsform begrenzt. Fehlt der Niederhalterblock 5, so muss die Verankerung 12 derart ausgeführt sein, dass dennoch eine unmittelbare oder mittelbare Festlegung an der Basis 3 erfolgen kann.

Eine Befestigungsvorrichtung 15 ist durch den flachen, die Schenkel des Adapterformteils 14 verbindenden Stegbereich gebildet. Die Befestigungsvorrichtung 15 ist dazu vorgesehen, dass daran ein Adapterkupplungselement 20 befestigt werden kann. Im Ausführungsbeispiel weist das Adapterkupplungselement 20 einen Kugelkopf 50 mit geringerem Durchmesser als der Kugelkopf 80 auf, nämlich beispielsweise mit einem Durchmesser von 50 Millimeter. Der Kugelkopf 50 ist zur Aufnahme von kleineren Anhängergegenkupplungselementen (nicht dargestellt) an Anhängern, beispielsweise aus dem Bereich der PKW-Anhänger, geeignet. Bei dem Adapterkupplungselement 20 handelt es sich um ein günstig zu beschaffendes Standardteil, welches neben dem Kugelkopf 50 einen gebogenen Bereich und einen Befestigungsflansch aufweist. Der Befestigungsflansch ist zur Befestigung mittels Gewindebolzen und Schraubmuttern an der Befestigungsvorrichtung 15 geeignet.

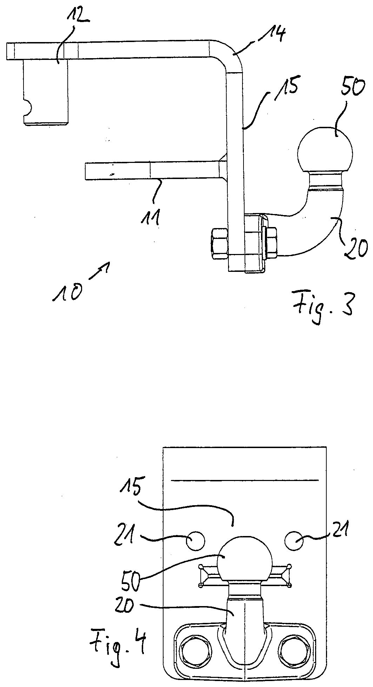

In der Figur 3 ist eine zweite Ausführungsform des erfindungsgemäßen Kupplungsadapters 10 in einer Seitenansicht mit Adapterkupplungselement 20 dargestellt. Die nicht dargestellte Anhängekupplung 1 entspricht im Wesentlichen derjenigen Anhängekupplung 1 gemäß Figur 1.

In der Figur 4 ist die Ausführungsform gemäß Figur 3 in einer weiteren Seitenansicht dargestellt. Die Figuren 3 und 4 werden nachfolgend gemeinsam beschrieben. Gleich wirkende Teile sind mit den gleichen Bezugszeichen, wie in den Figuren 1 und 2 versehen, wobei nicht notwendigerweise auf alle dort beschriebenen Teile noch einmal eingegangen wird.

Der Unterschied der Ausführungsform gemäß Figuren 3 und 4 besteht in der Befestigungsvorrichtung 15, welche hier eine wesentlich größere Erstreckung in vertikaler Richtung, bezogen auf ihre Einbaulage, aufweist. Dadurch besteht die Möglichkeit das Adapterkupplungselement 20 in verschiedenen Höhen an der Befestigungsvorrichtung anzubringen. Die Befestigungsvorrichtung 15 erstreckt sich insbesondere über das Gegenkupplungselement 11 hinaus nach unten, so dass hierdurch eine besonders hoch an einer land- oder forstwirtschaftlichen Zugmaschine angeordnete Anhängekupplung 1 mit einer niedrigeren Gegenkupplung eines Anhängers verbindbar ist.

Das Adapterformteil 14 an sich weist gegenüber der Figur 2 eine geänderte Form mit zwei rechtwinklig zueinander angeordneten Schenkeln auf. An dem einen Schenkel ist die Verankerung 12 angeordnet, während der zweite Schenkel die Befestigungsvorrichtung 15 bildet. Das Gegenkupplungselement 11 ist in Form eines Stegs gebildet, welcher mit der Befestigungsvorrichtung 15 verbunden, vorzugsweise verschweißt ist. In der Figur 4 sind Bohrungen 21 zur Aufnahme von Gewindebolzen erkennbar, welche eine vorbereitete, alternative Position für das Adapterkupplungselement 20 an der Befestigungsvorrichtung 15 darstellen.

### Bezugszeichenliste

- 1: Anhängekupplung
- 2: Kupplungselement
- 3: Basis
- 4: Bohrung
- 5: Niederhalterblock
- 6: Fußabschnitt
- 10: Kupplungsadapter
- 11: Gegenkupplungselement
- 12: Verankerung
- 14: Adapterformteil
- 15: Befestigungsvorrichtung
- 16: Bolzen
- 17: Sicherungsnut
- 18: Fixierbolzen
- 19: Sicherungssplint
- 20: Adapterkupplungselement
- 21: Bohrungen
- 50, 80: Kugelkopf

## Patentansprüche

1. Kupplungsadapter (10) zur Anordnung an einer Anhängekupplung (1),
mit einem Gegenkupplungselement (11) zur Verbindung mit einem Kupplungselement (2) der Anhängekupplung und mit einer Verankerung (12) zur Festlegung an einer Basis (3) der Anhängekupplung (1),
wobei das Gegenkupplungselement (11) und die Verankerung (12) an einem Adapterformteil (14) angeordnet sind
und wobei an dem Adapterformteil (14) weiterhin eine Befestigungsvorrichtung (15) für ein Adapterkupplungselement (20) vorgesehen ist,
**dadurch gekennzeichnet,**
**dass** das Adapterkupplungselement (20) einen Kugelkopf (50) mit geringerem Durchmesser aufweist, als ein Kugelkopf (80) des Kupplungselements (2).

2. Kupplungsadapter nach Anspruch 1,
**dadurch gekennzeichnet,**
**dass** das Adapterformteil (14) derart geformt ist, dass die Verbindung des Gegenkupplungselements (11) gleichzeitig mit dem Festlegen der Verankerung (12) herstellbar ist.

3. Kupplungsadapter nach einem der vorhergehenden Ansprüche,
**dadurch gekennzeichnet,**
**dass** die Verankerung (12) einen Bolzen (16) zum Einstecken in eine Bohrung (4) der Anhängekupplung (1) aufweist, wobei die Bohrung (4) für eine Aufnahme eines Niederhalters ausgerüstet ist.

4. Kupplungsadapter nach Anspruch 3,
**dadurch gekennzeichnet,**
**dass** der Bolzen (16) eine Sicherungsnut (17) zur Aufnahme eines Fixierbolzens (18) aufweist.

5. Kupplungsadapter nach einem der vorhergehenden Ansprüche,
**dadurch gekennzeichnet,**
**dass** das Gegenkupplungselement (11) in Einbaulage einen zylindrischen Fußabschnitt (6) des Kupplungselements (2) umschließt.

6. Kupplungsadapter nach Anspruch 4,
**dadurch gekennzeichnet,**
**dass** der Fixierbolzen (18) durch einen Sicherungssplint (19) gesichert ist.

7. Kupplungsadapter nach einem der vorhergehenden Ansprüche,
**dadurch gekennzeichnet,**
**dass** der Kupplungsadapter (10) auf eine Anhängekupplung (1) mit einem Niederhalter angepasst ist.

8. Kupplungsadapter nach einem der vorhergehenden Ansprüche,
**dadurch gekennzeichnet,**
**dass** die Befestigungsvorrichtung (15) sich in Einbaulage über das Gegenkupplungselement (11) hinaus nach unten erstreckt.

9. Kupplungsadapter nach einem der vorhergehenden Ansprüche,
**dadurch gekennzeichnet,**
**dass** das Adapterformteil (14) zwei rechtwinklig zueinander angeordnete Schenkel aufweist,
wobei and dem einen Schenkel die Verankerung (12) angeordnet ist und der zweite Schenkel die Befestigungsvorrichtung (15) bildet.

10. Kupplungsadapter nach Anspruch 9,
**dadurch gekennzeichnet,**
**dass** das Gegenkupplungselement (11) in Form eines Steas gebildet ist, der mit Befestigungsvorrichtung (15) verbunden ist.

## Claims

1. Coupling adaptor (10) for arranging on a trailer hitch (1),
having a counter coupling element (11) for connecting to a coupling element (2) of the trailer hitch and having an anchorage (12) for fixing to a base (3) of the trailer hitch (1),
wherein the counter coupling element (11) and the anchorage (12) are arranged on an adaptor formed part (14)
and wherein on the adaptor formed part (14), furthermore, an attachment device (15) for an adaptor coupling element (20) is provided,
**characterised in**
**that** the adaptor coupling element (20) comprises a ball head (50) of smaller diameter than a ball head (80) of the coupling element (2).

2. Coupling adaptor according to claim 1,
**characterised in**
**that** the adaptor formed part (14) is formed such, that the connection of the counter coupling element (11) is established at the same time as the fixing of the anchorage (12).

3. Coupling adaptor according to anyone of the preceding claims,
**characterised in**
**that** the anchorage (12) has a bolt (16) for inserting into a bore (4) of the trailer hitch (1), wherein the bore (4) is equipped for accommodating a holding-down device.

4. Coupling adaptor according to claim 3,
**characterised in**
**that** the bolt (16) has a securing groove (17) for accommodating a fixing bolt (18).

5. Coupling adaptor according to anyone of the preceding claims,
**characterised in**
**that** the counter coupling element (11) encloses in the assembly position a cylindrical foot portion (6) of the coupling element (2).

6. Coupling adaptor according to claim 4,
**characterised in**
**that** the fixing bolt (18) is secured by a securing split pin (19).

7. Coupling adaptor according to anyone of the preceding claims,
**characterised in**
**that** the coupling adaptor (10) is adapted to a trailer hitch (1) with a holding-down device.

8. Coupling adaptor according to anyone of the preceding claims,
**characterised in**
**that** the attachment device (15) extends in the assembly position beyond the counter coupling element (11) downwards.

9. Coupling adaptor according to anyone of the preceding claims,
**characterised in**
**that** the adaptor formed part (14) has two webs arranged at a right angle to each other,
wherein on the one web the anchorage (12) is arranged and wherein the second web forms the attachment device (15).

10. Coupling adaptor according to claim 9.
**characterised in**
**that** the counter coupling element (11) is formed in the shape of a web, which is connected to the attachment device (15).

## Revendications

1. Adaptateur d'attelage (10) destiné à être placé sur un attelage de remorque (1),
avec un élément de contre-attelage (11) destiné à être assemblé avec un élément d'attelage (2) de l'attelage de remorque et avec un ancrage (12) destiné à être immobilisé sur une base (3) de l'attelage de remorque (1),
l'élément de contre-attelage (11) et l'ancrage (12) étant placés sur une pièce moulée (14) d'adaptateur
et sur la pièce moulée (14) d'adaptateur état prévu par ailleurs un dispositif de fixation (15) pour un élément d'attelage (20) de l'adaptateur,
**caractérisé en ce que**
l'élément d'attelage de l'adaptateur (20) comporte une tête sphérique (50) de diamètre plus faible qu'une tête sphérique (80) de l'élément d'attelage (2).

2. Adaptateur d'attelage selon la revendication 1,
**caractérisé en ce que**
la pièce moulée (14) d'adaptateur est façonnée de telle sorte que l'assemblage de l'élément de contre-attelage (11) est établi simultanément à l'immobilisation de l'ancrage (12).

3. Adaptateur d'attelage selon l'une quelconque des revendications précédentes,
**caractérisé en ce que**
l'ancrage (12) comporte un boulon (16) destiné à être inséré dans un perçage (4) de l'attelage de remorque (1), le perçage (4) étant équipé pour recevoir un serre-flan.

4. Adaptateur d'attelage selon la revendication 3,
**caractérisé en ce que**
le boulon (16) comporte une rainure de blocage (17) destinée à recevoir un boulon de fixation (18).

5. Adaptateur d'attelage selon l'une quelconque des revendications précédentes,
**caractérisé en ce**
**qu'**en position de montage, l'élément de contre-attelage (11) entoure un tronçon de pied (6) de l'élément d'attelage (2).

6. Adaptateur d'attelage selon la revendication 4,
**caractérisé en ce que**
le boulon de fixation (18) est bloqué par une goupille de sécurité (19).

7. Adaptateur d'attelage selon l'une quelconque des revendications précédentes,
**caractérisé en ce que**
l'adaptateur d'attelage (10) est adapté à un attelage de remorque (1) avec un serre-flan.

8. Adaptateur d'attelage selon l'une quelconque des revendications précédentes,
**caractérisé en ce**
**qu'**en position de montage, le dispositif de fixation (15) s'étend vers le bas, par-dessus l'élément de contre-attelage (11).

9. Adaptateur d'attelage selon l'une quelconque des revendications précédentes,
**caractérisé en ce que**
la pièce moulée d'adaptateur (14) comporte deux branches placées mutuellement à angle droit,
sur l'une des branches étant placé l'ancrage (12) et la deuxième branche formant le dispositif de fixation (15).

10. Adaptateur d'ancrage selon la revendication 9,
**caractérisé en ce que**
l'élément de contre-attelage (11) est conçu sous la forme d'un listel qui est assemblé avec le dispositif de fixation (15).
